# EUROPEAN PATENT SPECIFICATION

(11) **EP 1 566 038 B1**
(45) Date of publication and mention of the grant of the patent: **18.10.2006**
(21) Application number: 03783287.0
(22) Date of filing: 07.11.2003
(51) Int. Cl.: H04L 29/06, H04L 29/08, A63F 13/12, H04N 7/24

(54) **METHODS AND SYSTEMS FOR TRANSFERRING EVENTS INCLUDING MULTIMEDIA DATA**
VERFAHREN UND SYSTEM ZUR ÜBERTRAGUNG VON EREIGNISSEN, EINSCHLIESSLICH MULTIMEDIA DATEN
PROCEDES ET SYSTEMES POUR TRANSFERER DES EVENEMENTS COMPRENANT DES DONNEES MULTIMEDIA

(30) Priority: 27.11.2002 US 306536
(43) Date of publication of application: 24.08.2005
(73) Proprietor: Hewlett-Packard Development Company, L.P., Houston, TX 77070 (US)
(72) Inventor: YONG, Yan, Fremont, CA 94555 (US); SHEN, Bo, Mountain View, CA 94041 (US); BASU, Sujoy, Mountain View, CA 94040 (US); KUMAR, Rajendra, Los Altos, CA 94024 (US)
(74) Representative: Schoppe, Fritz
(86) International application number: PCT/US2003/035821
(87) International publication number: WO 2004/051962

(56) References cited:
- WO-A-00/39678
- US-A- 6 166 734
- US-B1- 6 259 443
- CHIA-CHEN KUO ET AL: "Design and implementation of a network application architecture for thin clients" PROCEEDINGS OF THE 26TH. ANNUAL INTERNATIONAL COMPUTER SOFTWARE AND APPLICATIONS CONFERENCE. COMPSAC 2002. OXFORD, ENGLAND, AUG. 26 - 29, 2002, ANNUAL INTERNATIONAL COMPUTER SOFTWARE AND APPLICATIONS CONFERENCE, LOS ALAMITOS, CA: IEEE COMP. SOC, US, vol. CONF. 26, 26 August 2002 (2002-08-26), pages 193-198, XP010611116 ISBN: 0-7695-1727-7

## Description

### TECHNICAL FIELD

Embodiments of the present invention relate to computer system networks. More specifically, embodiments of the present invention relate to multimedia streaming in a network environment.

### BACKGROUND ART

Computer system networks provide access to local resources (e.g., software applications, data, Web pages, etc., on a server) from a remote client device. Applications such as virtual network computing have extended this idea further. In a virtual computing network, servers supply not only software applications and data but also a desktop environment that can be accessed and controlled from client devices. In essence, a user at a client device is presented with a display (a graphical user interface or desktop) that is generated at a server and then transferred to and reproduced at the client. Accordingly, the amount of state maintained by the client can be reduced resulting in what is referred to as "thin" client (see also document WO-A-00/39678). Also, a single desktop can be simultaneously accessed and viewed from several different clients. This may be particularly useful when implementing a group of cooperating engineering work stations.

Prior art virtual network computing systems typically use protocols such as the Remote Frame Buffer (RFB) protocol to provide client access to the server-generated graphical user interface. The image to be displayed on a computer system monitor is held in a frame buffer on the server. In a limiting case, the entire contents of the frame buffer are periodically transferred to the client device for display. Enhancements to the limiting case include sending only the changes to the frame buffer (and hence to the display) that occurred since the preceding transfer.

Typically, the rate of transfer to the client is about 10-15 frames per second. While this rate is fairly high, it is not considered high enough to satisfactorily transfer video data or multimedia data (video and audio data) from the server to the client. Consequently, prior art systems are limited in this regard.

Accordingly, a more satisfactory way of transferring video/multimedia data from servers to clients in a virtual network computing system is desirable. Embodiments of the present invention provide such an improvement.

### DISCLOSURE OF THE INVENTION

Embodiments of the present invention pertain to methods and systems for transferring an event from a server to a remote client. An event is received from a driver. The event is dispatched into an event queue according to the event type. The event is processed according to the event type. The processing includes encoding the event when the event comprises multimedia data. The event is transferred to the remote client when triggered. The transfer occurs according to a protocol corresponding to the event type.

### BRIEF DESCRIPTION OF THE DRAWINGS

The accompanying drawings, which are incorporated in and form a part of this specification, illustrate embodiments of the invention and, together with the description, serve to explain the principles of the invention:
FIGURE 1 is a block diagram of a server and a client coupled in a network according to one embodiment of the present invention.
FIGURE 2 is a block diagram of a desktop streaming server in accordance with one embodiment of the present invention.
FIGURE 3 is a block diagram of a driver interface in accordance with one embodiment of the present invention.
FIGURE 4 is a block diagram showing differentiation of window updates according to one embodiment of the present invention.
FIGURE 5 is a block diagram of a desktop streaming engine according to one embodiment of the present invention.
FIGURE 6 is a block diagram of a desktop streaming client according to one embodiment of the present invention.
FIGURE 7 is a flowchart of a method for transferring an event to a remote client according to one embodiment of the present invention.

The drawings referred to in this description should not be understood as being drawn to scale except if specifically noted.

### BEST MODE FOR CARRYING OUT THE INVENTION

Reference will now be made in detail to various embodiments of the invention, examples of which are illustrated in the accompanying drawings. While the invention will be described in conjunction with these embodiments, it will be understood that they are not intended to limit the invention to these embodiments. Furthermore, in the following description of the present invention, numerous specific details are set forth in order to provide a thorough understanding of the present invention. In other instances, well-known methods, procedures, components, and circuits have not been described in detail as not to unnecessarily obscure aspects of the present invention.

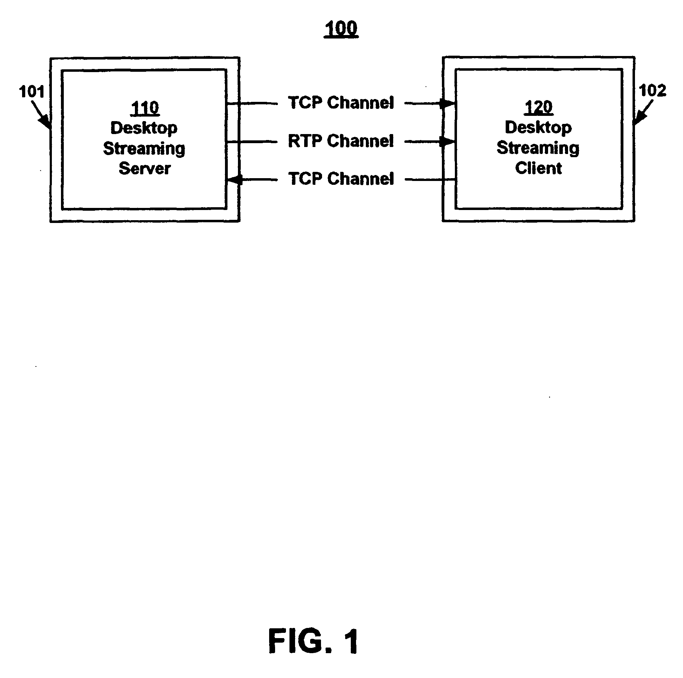

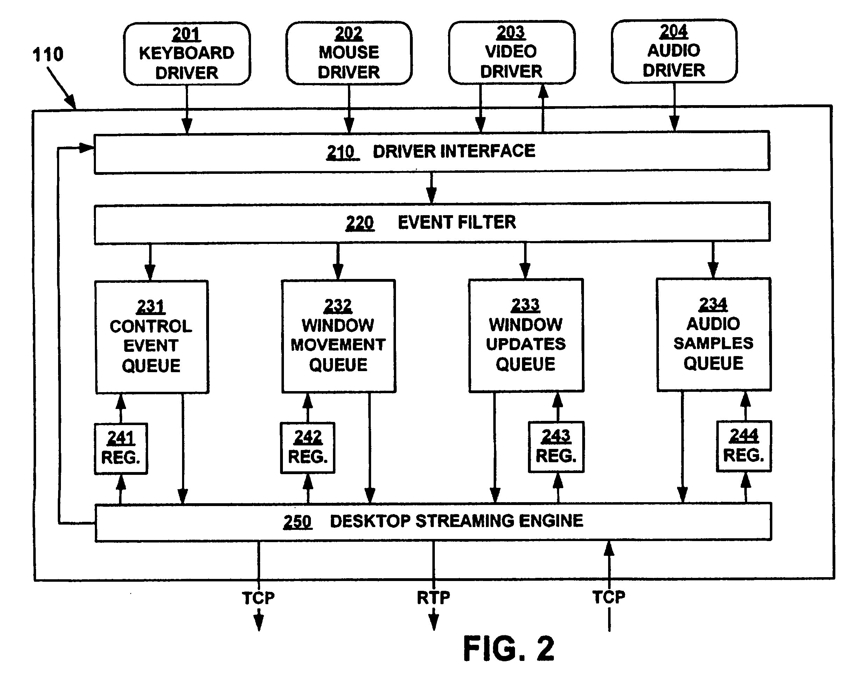

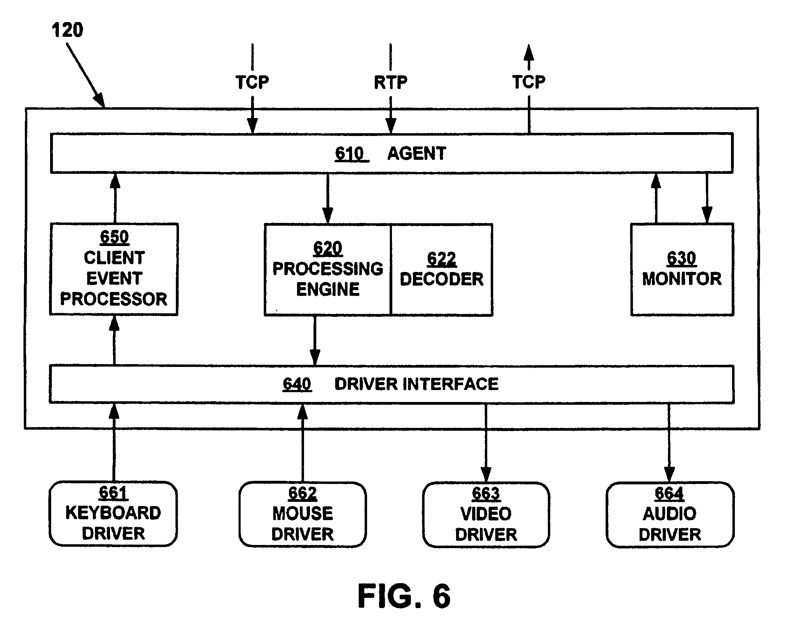

Figure 1 is a block diagram of a server 101 and a client 102 coupled in a network 100 according to one embodiment of the present invention. It is appreciated that network 100 may include elements other than those shown. Network 100 may also include more than one of the various elements shown; for example, there may be multiple clients coupled to server 101, and there may be multiple servers. The functionality of server 101 and client 102 is discussed below (refer at least to Figures 2 and 6); however, it is appreciated that these elements may implement functionality other than that discussed.

Communication may occur directly between server 101 and client 102 of Figure 1, or indirectly through an intermediary device or node (not shown). Also, communication may be wired or wireless, or a combination of wired and wireless. In one embodiment, communication occurs over the World Wide Web (or Internet).

In one embodiment, server 101 and client 102 are computer systems that provide processing capability and memory capacity. In addition, according to the embodiments of the present invention, server 101 implements a desktop streaming server 110, and client 102 implements a desktop streaming client 120. In this embodiment, desktop streaming server 110 and desktop streaming client 120 allow the server 101 to supply a display (e.g., a graphical user interface, and in particular, a "desktop" display) to the client 102. As will be seen, both server-side control and client-side control are allowed, either concurrently or exclusively.

According to the embodiments of the present invention, "events" are transferred from server 101 to client 102, and vice versa, using desktop streaming server 110 and desktop streaming client 120, respectively. As used herein, an event is generally an output of a software driver, such as a keyboard driver, a mouse driver, a video driver or an audio driver. Thus, events include detectable actions or occurrences such as clicking a mouse button or pressing a key on a keyboard. Events can also refer to actions or occurrences that can cause a change in the display (graphical user interface) to be displayed by the client 102. For example, a change in the display caused by scrolling through a text (word processing) document, or by changing from one page to another page in the document, can constitute an event. A movement of a window in the display can also constitute an event. A moving video display can also constitute an event. An audio sample can also constitute an event.

To summarize, as used herein, an event is an output of a driver used with either server 101 or client 102; an event may cause a change in the display on either server 101 or client 102, and/or may cause an audio output at the client 102. Events can be generally categorized as: control events, and data events. Control events carry control information to change the execution behaviors of other components, locally or remotely. Data events carry content data to inform other components of content changes.

For simplicity of discussion, the term "mouse" is used herein; however; it is understood that other means of cursor control may be used instead of, or in combination with, a mouse. There is a myriad of cursor control mechanisms known in the art, and each of these may be used in accordance with the present invention. The term "keyboard" is also used herein. Again, there is a myriad of mechanisms known in the art that provide the functionality of a keyboard, including voice recognition systems, and each of these may be used in accordance with the present invention. Thus, although embodiments of the present invention are described for a mouse and keyboard, the present invention is not so limited. Instead, the focus should be on the term "event" and how that term is used herein, as described above. In that context, keyboard and mouse events are simply examples of events, while the embodiments of the present invention are well suited to use with virtually all types of events.

In one embodiment, on the server side, the events received from the drivers are dispatched into event queues according to the event type. The events are then processed according to their event type; for example, a multimedia event may be encoded. The events are then transferred from server 101 to client 102 according to a protocol that corresponds to the event type. In one embodiment, events from keyboard and mouse drivers are transferred to client 102 using a protocol such as Transmission Control Protocol (TCP), while events from video and audio drivers are transferred to client 102 using a protocol such as Real Time Protocol (RTP). These processes are described in further detail in conjunction with Figure 2, below.

TCP and RTP are known in the art. TCP provides a highly reliable protocol, while RTP provides the timing capability useful for synchronizing the video and audio portions of a multimedia data object. Thus, TCP can be used to precisely transfer control events (e.g., keyboard and mouse events) as well as other high precision events, such as changes in graphics applications, and RTP can be used for streaming frame buffer (video buffer) and sound buffer updates. Other protocols that can provide these or similar capabilities may be used instead.

On the client side, in one embodiment, events are received from keyboard and mouse drivers and transferred to server 101 of Figure 1 using a protocol such as TCP. This process is described further in conjunction with Figure 6, below. In the present embodiment, the relationship between server 101 and client 102 does not have the client sending events from audio and video drivers to the server; however, the present invention is not so limited.

Figure 2 is a block diagram of a desktop streaming server 110 in accordance with one embodiment of the present invention. Desktop streaming server 110 is implemented in server 101 of Figure 1 as hardware, software, firmware, or a combination thereof. As illustrated by Figure 2, desktop streaming server 110 includes a number of elements that are rendered separately for clarity of illustration and discussion; however, it is understood that these elements may not exist as separate entities within desktop streaming server 110. In general, according to the various embodiments of the present invention, desktop streaming server 110 provides the capability and functionality provided by the various elements of Figure 2. In addition, desktop streaming server 110 may provide other capabilities and functionalities in addition to those described herein.

In the present embodiment, a driver interface 210 receives input (events) from a number of drivers such as, but not limited to, keyboard driver 201, mouse driver 202, video driver 203, and/or audio driver 204. Thus, in addition to intercepting more conventional events such as window changes, keyboard input and cursor movement, driver interface 210 also samples video data from the video driver 203 and audio data from the audio driver 204.

Generally, the drivers 201-204 are components of the underlying operating system. For example, the keyboard driver for a Windows environment may be different than the keyboard driver for a Linux environment. According to the present embodiment, driver interface 210 provides the capability to communicate with the various types of drivers while providing a fixed interface to the downstream portions of desktop streaming server 110 (e.g., a fixed interface to event filter 220).

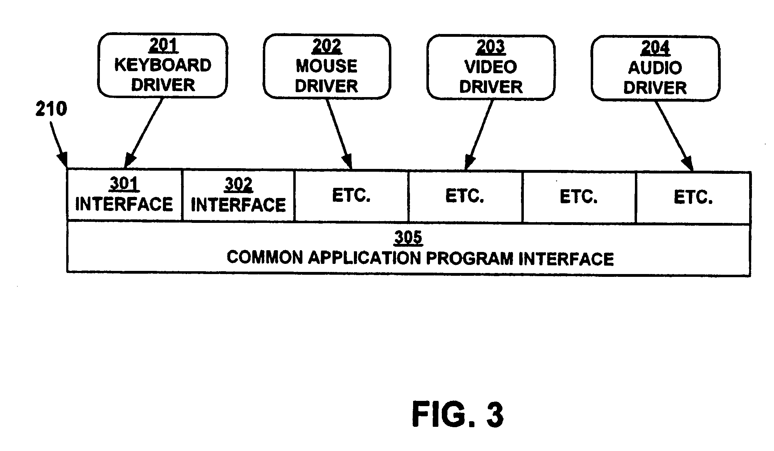

Figure 3 is a block diagram of a driver interface 210 in accordance with one embodiment of the present invention. In this embodiment, driver interface 210 includes a number of interface modules, exemplified by interfaces 301 and 302, so that there is a module suitable for interfacing with each driver. This is not to say that there is an interface module per driver, although that may be the case.

In the present embodiment, driver interface 210 also includes an application program interface (API) 305 that is common to the interfaces 301 and 302, etc. The API 305 provides a single interface to the remainder of desktop streaming server 110 despite the myriad of possible drivers, and thus insulates the desktop streaming server 110 from the underlying operating system.

Returning to Figure 2, in the present embodiment, the events from driver interface 210 are provided to (received by) event filter 220. In this embodiment, event filter 220 identifies the event according to event type, and dispatches the event into a respective event queue according to event type. The event queues are used to buffer similar types of events that can be transferred to the desktop streaming client 120 (Figure 1) using a protocol appropriate to the event type (e.g., TCP or RTP) after processing (if any) appropriate to the event type.

In the present embodiment, the event filter 220 of Figure 2 categorizes events into the following types: 1) control events that are generated by keyboard input or cursor (e.g., mouse) movement, for example; 2) window movement events that are generated by window movements in which window content is unchanged; 3) window updates that are generated by a change in window content; and 4) audio samples that are captured from a change in the sound buffer of the audio driver 204. In this embodiment, control events are forwarded to the control event queue 231; window movements are forwarded to the window movement queue 232; window updates are forwarded to the windows update queue 233; and audio samples are forwarded to the audio sample queue 234.

In the present embodiment, control events in the control event queue 231 record the coordinate changes of the mouse or cursor. For example, for a particular cursor movement, only the start and end coordinates of the movement may be transferred to the desktop streaming client 120 of Figure 1. Control events can be further optimized by the desktop streaming engine 250.

Continuing with reference to Figure 2, in the present embodiment, the window movement queue 232 records the coordinate changes of a window that is being moved (without the content of the window being changed). In those cases in which the window content has been previously transferred to desktop streaming client 120 of Figure 1, only the changes in the coordinates of the window may be transferred to the client. The client can then render the desktop display using the previously received window content and the new window coordinates.

According to the present embodiment, the window updates queue 233 of Figure 2 records the updates of window content. These updates can be captured from the video frame buffer. In one embodiment, in order to facilitate selection of an appropriate encoder and transfer protocol, window updates are categorized into three types: 1) graphics window updates; 2) video window updates; and 3) other window updates. Here, graphics is used to refer to relatively static images (e.g., images having relatively low update rates in comparison to video); video refers to moving images having a relatively high update rate; and other window updates refers to relatively static window content such as the text in a word processing document. Generally speaking, the window updates can be separated into categories according to the complexity of the image and the update frequency.

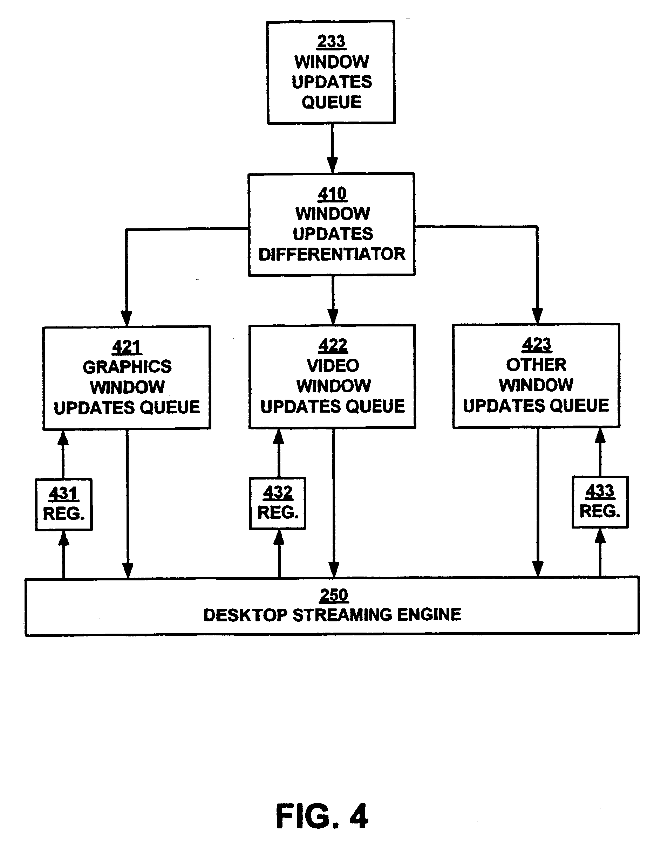

Figure 4 is a block diagram showing differentiation of window updates according to one embodiment of the present invention. In this embodiment, window updates differentiator 410 filters the windows into the aforementioned categories. The window updates differentiator 410 can accomplish this using information such as the display application type, and the coordinates and screen sizes of the windows. The display application type can be acquired from the driver interface 210 (Figure 2) when, for example, a new window is created, a Uniform Resource Locator (URL) for a Web site is clicked, or an application is executed. The coordinates and screen sizes help to locate which part of an update to the video frame buffer belongs to which window.

Graphics window updates are forwarded to the graphics window updates queue 421; video window updates are forwarded to the video window updates queue 422; and other window updates are forwarded to the other window updates queue 423.

Returning to Figure 2, in the present embodiment, the transfer of events from each of the queues 231-234 to the desktop streaming engine 250 is triggered by a respective regulator 241, 242, 243 and 244. Similarly, in the embodiment of Figure 4, the queues 421-423 are under control of a respective regulator 431, 432 and 433.

In one embodiment, the regulators 241-244 of Figure 2 (and the regulators 431-433 of Figure 4) trigger (impel) events from their respective queues based on a threshold being reached or a time interval having passed. The threshold is based on the number of events in a respective event queue. When the number of events in the queue reaches a predefined threshold, some portion of the events or all of the events can be transferred from the queue. The threshold mechanism provides the capability to handle a burst of events, in order to prevent the queue from accumulating too many events before the events are transferred in response to a time-out signal. The threshold may be different for each of the queues 231-234 and 421-423. The threshold may also be changed by the desktop streaming engine 250 based on monitoring of the channels to the desktop streaming client 120 (Figure 1), or based on feedback from the desktop streaming client 120.

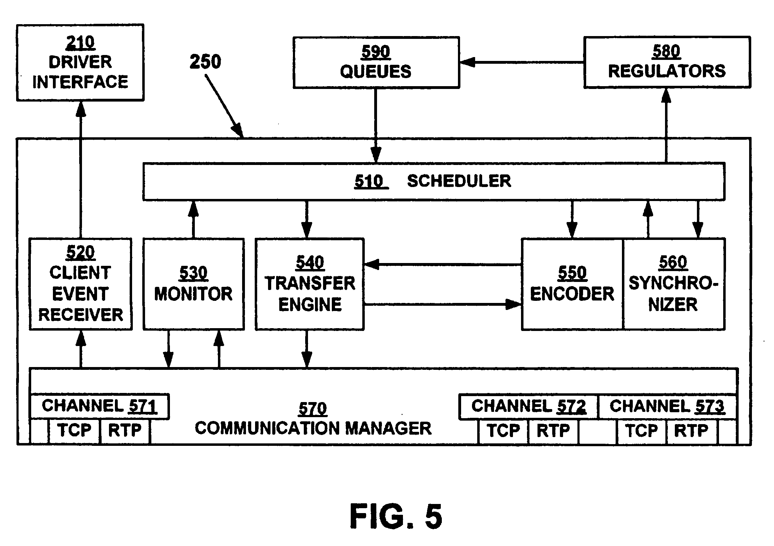

Otherwise, according to the present embodiment, the transfer of events from a respective event queue will occur after a specified time interval has passed. Thus, in one embodiment, the regulators 241-244 of Figure 2 and the regulators 431-433 of Figure 4 can include a timer. The time interval may be different for each of the queues 231-234 (Figure 2) and 421-423 (Figure 4). The time interval may also be changed by the desktop streaming engine 250 (Figure 2) based on monitoring of the channels to the desktop streaming client 120 (Figure 1), or based on feedback from the desktop streaming client 120. This is described further in conjunction with Figures 5 and 6, below.

Figure 5 is a block diagram of a desktop streaming engine 250 according to one embodiment of the present invention. As illustrated by Figure 5, desktop streaming engine 250 includes a number of elements that are rendered separately for clarity of illustration and discussion; however, it is understood that these elements may not exist as separate entities within desktop streaming engine 250. In general, according to the various embodiments of the present invention, desktop streaming engine 250 provides the capability and functionality provided by the various elements of Figure 5. In addition, desktop streaming engine 250 may provide other capabilities and functionalities in addition to those described herein.

In the present embodiment, scheduler 510 is coupled to the regulators 580 (e.g., regulators 241-244 and 431-433 of Figures 2 and 4, respectively), which in turn are coupled to the queues 590 (e.g., queues 231-234 and 421-423 of Figures 2 and 4, respectively). Scheduler 510 is also coupled to a monitor 530. In one embodiment, the monitor 530 periodically measures the available bandwidth of the channels 571, 572 and 573. Although only three channels are shown, it is appreciated that there may be some number of channels other than three. In another embodiment, the monitor 530 also collects information from desktop streaming client 120 (Figure 1) with regard to the workload of the client as well as the attributes of the client device (e.g., the device's display capabilities such as screen size and resolution, the device's processing capabilities such as processor speed, the device's available memory capacity, and the like). Based on the information from monitor 530, scheduler 510 can set or adjust the trigger (e.g., the time interval, threshold or other mechanism) that is used to initiate the transfer of events from the various event queues. As mentioned above, different time intervals, thresholds, or the like can be specified for each of the queues.

The schedule for transferring events in the control event queue 231 and the window movement queue 232 (Figure 2) is relatively straightforward because these types of events require less communication overhead and therefore can be transferred almost if not immediately. The schedule for transferring events from the windows update queue 233 and the audio samples queue 234 can be adapted according to the information from monitor 530 (and also from monitor 630 of the client; see Figure 6), so as to provide a satisfactory display at client 102 (Figure 1).

Continuing with reference to Figure 5, and with reference also to Figures 2 and 4, transfer engine 540 forwards the events from event queues 590 to the appropriate channel based on the event type. For example, in one embodiment, events from control event queue 231, window movement queue 232, graphics window updates queue 421, and other window updates queue 423 can be forwarded to a TCP channel, while events from audio samples queue 234 and video window updates queue 422 can be forwarded to an RTP channel.

With reference to Figure 5, in the present embodiment, video and/or audio content may be encoded (compressed) using encoder 550. The degree of encoding is typically a function of the attributes of the client 102 (Figure 1), but the degree of encoding may also be influenced by the bandwidth of the connection (channel) between the client 102 and the server 101 (Figure 1).

In the present embodiment, the synchronizer 560 of Figure 5 synchronizes the audio with other related media parts. The media parts related to the audio can be text, graphics or video. In one embodiment, the audio and related portions are sent over separate channels (e.g., RTP channels). In that embodiment, synchronizer 560 requests scheduler 510 to obtain data from the corresponding samples queue (the audio samples queue 234, the window updates queue 233, and/or the window movement queue 232 of Figure 2) in a synchronized fashion. For example, if one second's worth of audio packets is acquired, one second's worth of video packets should also be acquired. This type of approach helps ensure that the audio and video packets will arrive at the client 102 (Figure 1) concurrently or within a short interval of each other. A small buffer may be utilized by client 102 to overcome any disparity in arrival times.

In another embodiment, with reference to Figure 5, the synchronization is done by encoder 550, regardless of whether or not the media parts (e.g, video data) are encoded. In this embodiment, encoder 550 can multiplex the audio and related media parts, and subsequeritly transfer the data to communication manager 570, which can then transfer the multiplexed packets over one channel (e.g., an RTP channel). A decoder on client 102 (Figure 1; also see Figure 6, below) can play the multiplexed data in a synchronized fashion. For example, within one second of actual time, the decoder can decode one second's worth of audio data, which can be place in an audio buffer. During the time remaining in the one second of actual time, the decoder can decode as many video frames as possible. In this manner, the desktop streaming server 110 of Figure 2 is able to take advantage of resources available on the client side.

Continuing with reference to Figure 5, in the present embodiment, communication manager 570 manages the communication channels 571-573. Also in the present embodiment, client event receiver 520 is for receiving control events (e.g., keyboard and mouse events) from desktop streaming client 120 (Figure 1). These events are forwarded by client event receiver 520 to driver interface 210 that, In one embodiment, forwards them to video driver 203 (Figure 2).

In summary, in one embodiment, the desktop streaming server 110 (Figure 2) intercepts events from the various drivers, filters those events and dispatches the events to the appropriate event queue based on event type, optionally encodes selected video data and audio data and streams that data to a client over a channel such as an RTP channel, and reacts to events received from the client.

Figure 6 is a block diagram of a desktop streaming client 120 according to one embodiment of the present invention. As illustrated by Figure 6, desktop streaming client 120 includes a number of elements that are rendered separately for clarity of illustration and discussion; however, it is understood that these elements may not exist as separate entities within desktop streaming client 120. In general, according to the various embodiments of the present invention, desktop streaming client 120 provides the capability and functionality provided by the various elements of Figure 6. In addition, desktop streaming client 120 may provide other capabilities and functionalities in addition to those described herein.

In the present embodiment, desktop streaming client 120 includes an agent 610 (which may also be referred to as a daemon). In this embodiment, the agent 610 establishes and maintains the channel connections with the server 101, specifically to the desktop streaming server 110 (Figure 1). As mentioned, these channels may utilize the TCP and RTP protocols. Agent 610 also forwards data received over the channels to processing engine 620. Agent 610 can also respond to inquiries from the desktop streaming server 110 regarding available channel bandwidth. Furthermore, at the beginning of a session, agent 610 can inform desktop streaming server 110 of the client's decoding capabilities as well as other client attributes, such as processor speed, and display screen size and resolution.

In the present embodiment, agent 610 of Figure 6 is coupled to a monitor 630, and can provide information from monitor 630 to the desktop streaming server 110 of Figure 1. In this embodiment, monitor 630 can monitor the workload of the client 102 (Figure 1), and can also provide information regarding available memory capacity. Also, monitor 630 can provide feedback regarding the efficiency in which the display is generated based on the events received from the desktop streaming server 110, so that the streaming rate, for example, can be adjusted accordingly. Thus, for example, the information from monitor 630 (and also from agent 610) can be used by the scheduler 510 of Figure 5 to set or adjust the trigger (e.g., the time interval, threshold or other mechanism) that is used to initiate the transfer of events from the various event queues of the desktop streaming server 110.

With reference to Figure 6, in the present embodiment, agent 610 is also coupled to processing engine 620. Events received by agent 610 are forwarded to processing engine 620. In one embodiment, processing engine 620 includes a decoder 622 for decoding (decompressing) data (events) if the data are encoded. The events from processing engine 620 are forwarded to driver interface 640, which functions in a manner similar to that described above for driver interface 210 (Figure 2) to forward the events to video driver 663 and/or audio driver 664.

In the present embodiment, driver interface 640 also receives events from keyboard driver 661 and mouse driver 662 of the client device. These events are forwarded to client event processor 650, which optimizes these events by eliminating non-critical events and then forwards the critical events to the desktop streaming server 110 (Figure 2) via agent 610. That is, for example, for a particular cursor movement, client event processor 650 may eliminate intermediate coordinates associated with the cursor movement, identifying and keeping only the start and end coordinates of the movement for transfer to the desktop streaming server 110.

Thus, in summary, in one embodiment, the desktop streaming client 120 (Figure 6) decodes events transferred from the server (when the events are encoded), updates the display based on the events, provides audio playback when the events include audio samples, responds to inquiries from the desktop streaming server 110 (Figure 2), periodically provides monitoring information to the desktop streaming server 110, and intercepts control events and sends them to the desktop streaming server 110.

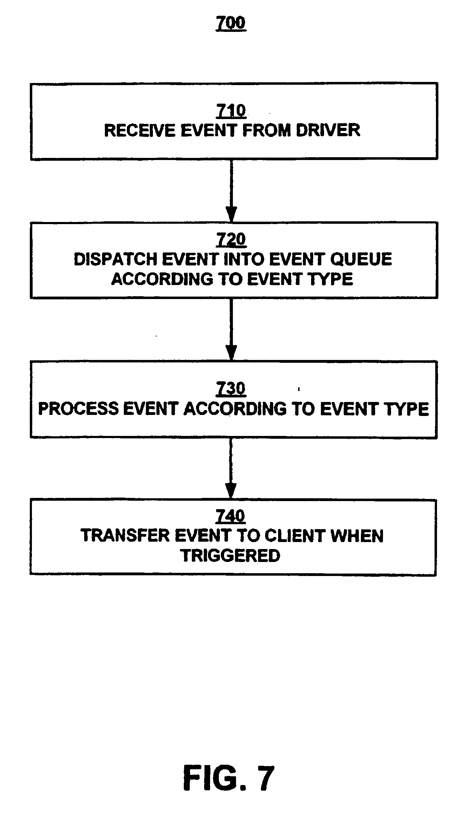

Figure 7 is a flowchart 700 of a method for transferring an event from a server to a client according to one embodiment of the present invention. Although specific steps are disclosed in flowchart 700, such steps are exemplary. That is, embodiments of the present invention are well suited to performing various other steps or variations of the steps recited in flowchart 700. It is appreciated that the steps in flowchart 700 may be performed in an order different than presented, and that not all of the steps in flowchart 700 may be performed. All of, or a portion of, the methods described by flowchart 700 may be implemented using computer-readable and computer-executable instructions which reside, for example, in computer-usable media of a computer system or like device. Generally, flowchart 700 is implemented by devices such as server 101 of Figure 1.

In step 710 of Figure 7, in the present embodiment, an event is received from a driver. The event may be a keyboard event, a cursor control (e.g, mouse) event, a video event, or an audio event.

In step 720, in the present embodiment, the event is dispatched to an event queue according to the event type. That is, events of the same type are forwarded to a particular queue. In one embodiment, the events are filtered to identify event type.

In step 730, in the present embodiment, the event is processed according to the event type. For example, when the event includes multimedia data (e.g., video data and/or audio data), the event may be encoded. For cursor movement, the coordinates of the points between the start and end points may be eliminated, with only the coordinates of the start and end point retained.

In step 740, in the present embodiment, the event is transferred to the client when triggered. The transfer to the client occurs according to a protocol that corresponds to the type of event. In one embodiment, event transfer is triggered by the passage of a specified time interval. In another embodiment, event transfer is triggered when the number of events in the event queue reaches a specified threshold.

Embodiments of the present invention are thus described. While the present invention has been described in particular embodiments, it should be appreciated that the present invention should not be construed as limited by such embodiments, but rather construed according to the following claims.

## Claims

1. A method (700) for transferring an event from a server to a remote client, said method comprising:
(710) receiving an event from a driver;
(720) dispatching said event into an event queue according to event type;
(730) processing said event according to said event type, wherein said processing comprises encoding said event when said event comprises multimedia data; and
(740) transferring said event to said remote client when triggered, wherein said transferring occurs according to a protocol corresponding to said event type.

2. The method of Claim 1 wherein said event is a keyboard event, a mouse event, a video event or an audio event and wherein said driver is a keyboard driver, a mouse driver, a video driver or an audio driver.

3. The method of Claim 2 wherein said protocol is Transport Control Protocol (TCP) for keyboard, mouse and graphics events and Real Time Protocol (RTP) for video and audio events.

4. The method of Claim 1 wherein said dispatching comprises:
(720) filtering said event to identify said event type.

5. The method of Claim 1 wherein said processing of multimedia data further comprises:
(730) synchronizing an audio portion and a related media portion of said multimedia data during said encoding, said related media portion selected from the group consisting of text, graphics and video.

6. The method of Claim 1 wherein said transferring is triggered by a timer.

7. The method of Claim 1 wherein said transferring is triggered when the number of events in said event queue reaches a threshold.

8. The method of Claim 1 further comprising:
(520) receiving events from said remote client.

9. A system (110) for transferring an event to a remote client, said system comprising:
a driver interface (210) for receiving different types of events from a plurality of drivers (201-204);
an event filter (220) coupled to said driver interface, said event filter for identifying an event by event type and for placing said event into an event queue (231-234, 421-423) according to said event type;
a regulator (241-244, 431-433) coupled to said event queue, said regulator for impelling said event from said event queue to a processing engine that encodes said event when said event comprises multimedia data; and
a channel (572, 573) coupled to said processing engine, said channel for transferring said event to said remote client according to a protocol corresponding to said event type.

10. A system (120) for receiving events from a remote server, said system comprising:
an agent (610) for managing a plurality of channels used for receiving different types of events from said remote server, each channel associated with one of a plurality of different protocols, wherein one of said channels is for streaming multimedia data;
a processing engine (620) coupled to said channels, said processing engine for decoding an event when said event comprises encoded multimedia data; and
a driver interface (640) coupled to said processing engine, said driver interface for forwarding said events to audio and video drivers according to event type, wherein said events are displayable on a display device.

## Patentansprüche

1. Ein Verfahren (700) zum Übertragen eines Ereignisses von einem Server zu einem entfernten Client, wobei das Verfahren folgende Schritte aufweist:
Empfangen (710) eines Ereignisses von einem Treiber;
Abgeben (720) des Ereignisses in eine Ereigniswarteschlange gemäß einem Ereignistyp;
Verarbeiten (730) des Ereignisses gemäß dem Ereignistyp, wobei das Verarbeiten ein Codieren des Ereignisses aufweist, wenn das Ereignis Multimediadaten aufweist; und
Übertragen (740) des Ereignisses zu dem entfernten Client, wenn dasselbe ausgelöst wird, wobei das Übertragen gemäß einem Protokoll entsprechend dem Ereignistyp auftritt.

2. Das Verfahren gemäß Anspruch 1, bei dem das Ereignis ein Tastaturereignis, ein Mausereignis, ein Videoereignis oder ein Audioereignis ist und bei dem der Treiber ein Tastaturtreiber, ein Maustreiber, ein Videotreiber oder ein Audiotreiber ist.

3. Das Verfahren gemäß Anspruch 2, bei dem das Protokoll für Tastatur-, Maus- und Graphikereignisse ein Transport-Control-Protocol (TCP) und für Video- und Audioereignisse ein Real-Time-Protocol (RTP) ist.

4. Das Verfahren gemäß Anspruch 1, bei dem das Abgeben folgenden Schritt aufweist:
Filtern (720) des Ereignisses, um den Ereignistyp zu identifizieren.

5. Das Verfahren gemäß Anspruch 1, bei dem das Verarbeiten von Multimediadaten ferner folgenden Schritt aufweist:
Synchronisieren (730) eines Audioabschnitts und eines verwandten Medienabschnitts der Multimediadaten während des Codierens, wobei der verwandte Medienabschnitt aus der Gruppe ausgewählt ist, die Texte, Graphiken und Video umfasst.

6. Das Verfahren gemäß Anspruch 1, bei dem das Übertragen durch einen Zeitgeber ausgelöst wird.

7. Das Verfahren gemäß Anspruch 1, bei dem das Übertragen ausgelöst wird, wenn die Anzahl von Ereignissen in der Ereigniswarteschlange eine Schwelle erreicht.

8. Das Verfahren gemäß Anspruch 1, das ferner folgenden Schritt aufweist:
Empfangen (520) von Ereignissen von dem entfernten Client.

9. Ein System (110) zum Übertragen eines Ereignisses zu einem entfernten Client, wobei das System folgende Merkmale aufweist:
eine Treiberschnittstelle (210) zum Empfangen unterschiedlicher Typen von Ereignissen von einer Mehrzahl von Treibern (201 - 204);
ein Ereignisfilter (220), das mit der Treiberschnittstelle gekoppelt ist, wobei das Ereignisfilter zum Identifizieren eines Ereignisses durch einen Ereignistyp und zum Platzieren des Ereignisses in eine Ereigniswarteschlange (231 - 234, 421 - 423) gemäß.dem Ereignistyp vorgesehen ist;
einen Regler (241 - 244, 431 - 433), der mit der Ereigniswarteschlange gekoppelt ist, wobei der Regler zum Leiten des Ereignisses von der Ereigniswarteschlagen zu einer Verarbeitungsmaschine vorgesehen ist, die das Ereignis codiert, wenn das Ereignis Multimediadaten aufweist; und
einen Kanal (572, 573), der mit der Verarbeitungsmaschine gekoppelt ist, wobei der Kanal zum Übertragen des Ereignisses zu dem entfernten Client gemäß einem Protokoll entsprechend dem Ereignistyp vorgesehen ist.

10. Ein System (120) zum Empfangen von Ereignissen von einem entfernten Server, wobei das System folgende Merkmale aufweist:
einen Agent (610) zum Verwalten einer Mehrzahl von Kanälen, die zum Empfangen unterschiedlicher Typen von Ereignisses von dem entfernten Server verwendet werden, wobei jeder Kanal einem von einer Mehrzahl unterschiedlicher Protokolle zugeordnet ist, wobei einer der Kanäle für ein Streaming von Multimediadaten vorgesehen ist;
eine Verarbeitungsmaschine (620), die mit den Kanälen gekoppelt ist, wobei die Verarbeitungsmaschine zum Decodieren eines Ereignisses vorgesehen ist, wenn das Ereignis codierte Multimediadaten aufweist; und
eine Treiberschnittstelle (640), die mit der Verarbeitungsmaschine gekoppelt ist, wobei die Treiberschnittstelle zum Weiterleiten der Ereignisse zu Audio- und Videotreibern gemäß einem Ereignistyp vorgesehen ist, wobei die Ereignisse an einer Anzeigevorrichtung anzeigbar sind.

## Revendications

1. Méthode (700) destinée à transférer un évènement depuis un serveur jusqu'à un client distant, ladite méthode comprenant :
(710) la réception d'un évènement depuis un pilote ;
(720) la répartition dudit évènement en une file d'attente d'évènements selon le type d'évènement ;
(730) le traitement dudit évènement selon ledit type d'évènement, dans lequel ledit traitement comprend le codage dudit évènement lorsque ledit évènement comprend des données multimédia ; et
(740) le transfert dudit évènement vers ledit client distant lorsqu'il est lancé, dans laquelle ledit transfert se produit selon un protocole correspondant audit type d'évènement.

2. Méthode selon la revendication 1, dans laquelle ledit évènement est un évènement clavier, un évènement souris, un évènement vidéo ou un évènement audio et dans laquelle ledit pilote est un pilote clavier, un pilote souris, un pilote vidéo ou un pilote audio.

3. Méthode selon la revendication 2, dans laquelle ledit protocole est un protocole de contrôle de transmission (TCP) pour des évènements clavier, souris et graphique et un protocole de transmission en temps réel (RTP) pour des évènements vidéo et audio.

4. Méthode selon la revendication 1, dans laquelle ladite répartition comprend :
(720) le filtrage dudit évènement pour identifier ledit type d'évènement.

5. Méthode selon la revendication 1, dans laquelle ledit traitement de données multimédia comprend en outre :
(730) la synchronisation d'une partie audio et d'une partie média apparentée desdites données multimédia pendant ledit codage, ladite partie média apparentée étant choisie parmi le groupe constitué par du texte, des graphiques et de la vidéo.

6. Méthode selon la revendication 1, dans laquelle ledit transfert est lancé par une minuterie.

7. Méthode selon la revendication 1, dans laquelle ledit transfert est lancé lorsque le nombre d'événements dans ladite file d'attente d'évènements atteint un seuil.

8. Méthode selon la revendication 1 comprenant en outre :
(520) la réception d'évènements depuis ledit client distant.

9. Système (110) destiné à transférer un évènement vers un client distant, ledit système comprenant :
une interface de pilote (210) destinée à recevoir différents types d'évènement depuis une pluralité de pilotes (201-204) ;
un filtre d'évènements (220) couplé à ladite interface de pilote, ledit filtre d'évènements étant destiné à identifier un évènement par type d'évènement et destiné à placer ledit évènement dans une file d'attente d'évènements (231-234, 421-423) selon ledit type d'évènement ;
un régulateur (241-244, 431-433) couplé à ladite file d'attente d'évènements, ledit régulateur étant destiné à pousser ledit évènement depuis ladite file d'attente d'évènements jusqu'à un moteur de traitement qui code ledit évènement lorsque ledit évènement comprend des données multimédia ; et
un canal (572, 573) couplé audit moteur de traitement, ledit canal étant destiné à transférer ledit évènement vers ledit client distant selon un protocole correspondant audit type d'évènement.

10. Système (120) destiné à recevoir des évènements depuis un serveur distant, ledit système comprenant :
un agent (610) destiné à gérer une pluralité de canaux utilisés pour recevoir différents types d'évènements depuis ledit serveur distant, chaque canal étant associé à l'un d'une pluralité de protocoles différents, dans lequel l'un desdits canaux est destiné à transmettre en continu des données multimédia ;
un moteur de traitement (620) couplé auxdits canaux, ledit moteur de traitement étant destiné à décoder un évènement lorsque ledit évènement comprend des données multimédia codées ; et
une interface de pilote (640) couplée audit moteur de traitement, ladite interface de pilote étant destinée à réacheminer lesdits évènements vers des pilotes audio et vidéo selon le type d'évènement, dans lequel lesdits évènements peuvent être affichés, sur un dispositif d'affichage.
